# EUROPÄISCHE PATENTANMELDUNG

(11) **EP 1 329 358 A1**
(43) Veröffentlichungstag der Anmeldung: **23.07.2003**
(21) Anmeldenummer: 02001227.4
(22) Anmeldetag: 17.01.2002
(51) Int. Cl.: B60P 1/44

(54) **Hubladebühnenvorrichtung, insbesondere für ein Fahrzeug**

(71) Anmelder: DAUTEL GMBH, D-74211 Leingarten (DE)
(72) Erfinder: Schmid, Stefan, 74078 Heilbronn (DE)
(74) Vertreter: Clemens, Gerhard, Dr.-Ing.

(57) **Zusammenfassung**

Eine Hubladebühnenvorrichtung (10), insbesondere für ein Fahrzeug, mit einer bewegbaren Plattform (12), einem an die Plattform (12) angeschlossenen Gelenkmechanismus, einer Aggregateinrichtung, die zum Heben und Senken der Plattform auf den Gelenkmechanismus einwirkt, und einer Steuereinrichtung (26), die von Schalteinheiten (14; 16) beaufschlagt wird und ihrerseits aufgrund der Steuersignale der Schalteinheiten (14; 16) die Aggregateinrichtung zum Heben und Senken der Plattform (12) ansteuert, ist dadurch gekennzeichnet, dass zumindest eine an der Plattform (12) ortsfest angeordnete Fußschalteinheit (14) vorhanden ist und eine mobile Handschalteinheit (16) mit zumindest einem Bedienelement (24) vorhanden ist, wobei der Senkvorgang positionsunabhängig für den Benutzer durch Betätigen der Handschalteinheit (16) ausgelöst wird und der Hebevorgang positionsabhängig für den Benutzer durch Betätigen der Fußschalteinheit (14) und, insbesondere anschließendem, Betätigen der Handschalteinheit (16) ausgelöst wird.

## Beschreibung

### TECHNISCHES GEBIET

Die vorliegende Erfindung betrifft eine Hubladebühnenvorrichtung insbesondere für ein Fahrzeug, mit einer bewegbaren Plattform, einem an die Plattform angeschlossenen Gelenkmechanismus, einer Aggregateinrichtung, die zum Heben und Senken der Plattform auf den Gelenkmechanismus einwirkt, und einer Steuereinrichtung, die von Schalteinheiten beaufschlagt wird und ihrerseits aufgrund der Steuersignale der Schalteinheiten die Aggregateinrichtung zum Heben und Senken der Plattform ansteuert.

### STAND DER TECHNIK

Die Bewegung der Plattformen von Hubladebühnenvorrichtungen der eingangs genannten Art wird über Schalteinheiten ausgelöst. Beim Hebe- und Senkvorgang besteht für die Bedienperson die Gefahr, dass sie zwischen die Plattform und die Ladekante gerät und sich schwere Verletzungen zuziehen kann. Daher schreiben Unfallverhütungsvorschriften und CE-Normen vor, dass eine sogenannte Zwei-Punkt-Bedienung verwendet werden muss, das heißt die Bedienperson nur in einer bestimmten Standposition die Bewegung der Plattform auslösen kann.

Aus der DE 31 45 862 A1 ist eine derartige Zwei-Punkt-Lösung bekannt. Dabei werden zwei Fußschalter eingesetzt, wobei die Betätigung des einen Schalters die Richtung und die Betätigung des anderen Schalters in einer vorgeschriebenen Reihenfolge die Funktion steuert.

Darüber hinaus sind Zwei-Punkt-Lösungen bekannt, die allein mit einer Handsteuerung arbeiten.

### DARSTELLUNG DER ERFINDUNG

Ausgehend von dem genannten Stand der Technik liegt der vorliegenden Erfindung das technische Problem beziehungsweise die Aufgabe zugrunde, eine Hubladebühnenvorrichtung der eingangs genannten Art anzugeben, die wirtschaftlich hergestellt werden kann, eine dauerhaft zuverlässige Funktion gewährleistet und gleichzeitig die Verletzungsgefahr für die Bedienperson infolge der Bewegung der Plattform ausschaltet.

Die erfindungsgemäße Hubladebühnenvorrichtung ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Hubladebühnenvorrichtung zeichnet sich demgemäß dadurch aus, dass zumindest eine an der Plattform ortsfest angeordnete Fußschalteinheit vorhanden ist und eine mobile Handschalteinheit mit zumindest einem Bedienelement vorhanden ist, wobei der Senkvorgang positionsunabhängig für den Benutzer durch Betätigen und Halten der Handschalteinheit ausgelöst wird und der Hebevorgang positionsabhängig für den Benutzer durch Betätigen und Halten der Fußschalteinheit und, insbesondere anschließendem, Betätigen und Halten der Handschalteinheit ausgelöst wird.

Eine Quetsch- und Schergefahr für eine auf der Plattform befindliche Bedienperson besteht nur bei dem Hebevorgang der Plattform. Bei diesem Vorgang muss die auf der Plattform befindliche Bedienperson eine durch die Fußschalteinheit vorgeschriebene Position einnehmen. Beim Senkvorgang besteht diese Gefahr nicht. Daher wird bei der erfindungsgemäßen Hubladebühnenvorrichtung für den Senkvorgang lediglich die Handschalteinheit eingesetzt. Dies führt zu einer Vereinfachung der Schalter und ein zweiter in der Plattform aufwendig einzubauender Fußschalter gemäß dem Stand der Technik kann vollständig entfallen. Dies führt zu wirtschaftlichen Vorteilen bei der Herstellung derartiger Hubladebühnenvorrichtungen. Darüber hinaus ist die Bedienung sehr einfach.

Eine besonders bevorzugte Ausgestaltung zeichnet sich dadurch aus, dass die Handschalteinheit und die Fußschalteinheit so verschaltet sind, dass bei Freigabe der Fußschalteinheit während des Hebevorgangs der Plattform dieselbe anhält und ein weiterer Hebevorgang durch weiteres Betätigen und Halten der Fußschalteinheit bei gedrückter Handschalteinheit ausgelöst wird.

Um den hohen Sicherheitsstandards zu genügen, zeichnet sich eine besonders vorteilhafte Weiterbildung dadurch aus, dass die Handschalteinheit und die Fußschalteinheit so verschaltet sind, dass eine Umkehrung der Bewegung vom Hebevorgang in den Senkvorgang nur möglich ist, wenn zuvor die Fußschalteinheit und die Handschalteinheit freigegeben werden.

Die mobile Handschalteinheit kann bevorzugt als Kabelfernsteuerung oder als Funkfernsteuerung ausgebildet sein.

Ein hoher Bedienkomfort wird gemäß einer bevorzugten Alternative dadurch gewährleistet, dass zumindest eine weitere Fußschalteinheit an der Plattform angeordnet ist, das heißt die Bedienperson an mehreren Stellen den Hebevorgang auslösen kann.

Um die Quetsch- beziehungsweise Schergefahr beim Hebevorgang der Plattform für die auf der Plattform stehende Bedienperson auszuschließen, zeichnet sich eine besonders bevorzugte Ausgestaltung dadurch aus, der Abstand der Fußschalteinheit zu einer Ladekante mindestens den Maßen eines großen Schrittes eines erwachsenen Menschen entspricht.

Ist neben der mobilen Handschalteinheit eine stationäre Handschalteinheit vorhanden, was bei vielen Fahrzeugen üblich ist, so sind beide Schalteinheiten so geschaltet, dass die mobile Handschalteinheit Priorität besitzt.

Eine weitere Ausgestaltung der erfindungsgemäßen Hubladebühnenvorrichtung zeichnet sich dadurch aus, dass die mobile Handschalteinheit ein erstes Bedienelement aufweist, dessen Betätigen und Halten die Senkbewegung der Plattform auslöst, und ein zweites Bedienelement aufweist, dessen Betätigen und Halten die Hebebewegung der Plattform in Verbindung mit dem betätigten und gehaltenen Fußschaltelement auslöst.

Um eine zuverlässige Funktion zu gewährleisten, sind bevorzugt Mittel zum Verriegeln vorhanden, die ein gleichzeitiges Betätigen des ersten Bedienelements und des zweiten Bedienelements verhindern.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Detailperspektivdarstellung des hinteren Bereichs eines Fahrzeugs mit Ladebühneneinrichtung mit einer ortsfesten Fußschalteinheit und einer mobilen Handschalteinheit gemäß einem ersten Ausführungsbeispiel und
- Fig. 2: schematische Detailperspektivdarstellung des hinteren Bereichs eines Fahrzeugs mit Ladebühneneinrichtung mit einer ortsfesten Fußschalteinheit und einer mobilen Handschalteinheit gemäß einem zweiten Ausführungsbeispiel.

### WEGE ZUM AUSFÜHREN DER ERFINDUNG

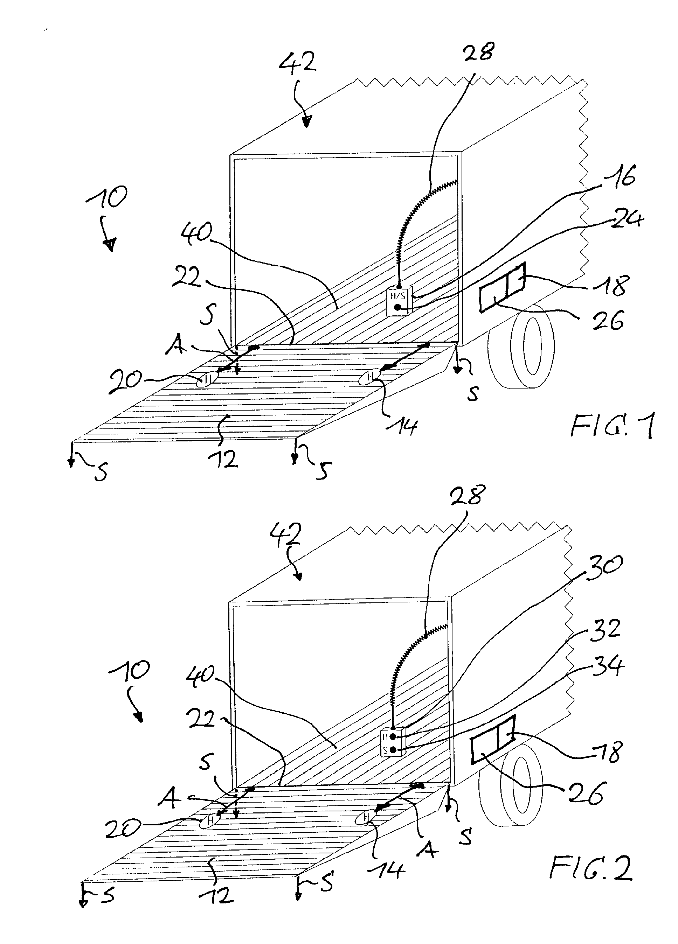

In Fig. 1 ist schematisch der hintere Bereich eines Lastkraftwagens mit seiner Ladefläche 40 und einem Fahrzeugaufbau 42 dargestellt. In diesem hinteren Bereich ist eine Hubladebühnenvorrichtung 10 an das Fahrzeug angeschlossen, die einerseits in Schließstellung den Fahrzeugaufbau 42 verschließt und andererseits dazu dient, das Fahrzeug zu be- oder zu entladen. Hierzu kann die Plattform 12 jeweils abgesenkt oder angehoben werden. Die Plattform 12 ist über einen in Fig. 1 nicht näher dargestellten Gelenkmechanismus an das Fahrzeug angeschlossen. Auf diesen Gelenkmechanismus wirkt eine in

Fig. 1 nicht näher dargestellte Aggregateinrichtung zum Bewegen der Plattform 12 ein. Die Aggregateinrichtung wird über eine in Fig. 1 stark schematisiert dargestellte Steuereinrichtung 26 angesteuert, die wiederum von Schalteinheiten 14, 16 beaufschlagt wird, die eine Bedienperson betätigt.

Im Seitenbereich der Plattform 12 ist im dargestellten Ausführungsbeispiel auf beiden Seiten jeweils eine Fußschalteinheit 14 integriert vorhanden, die von der Ladekante 22 der Ladefläche 40 einen Abstand A aufweist, der im Wesentlichen dem Maß eines großen Schrittes eines erwachsenen Menschen entspricht. Bei Betätigung der Fußschalteinheit 14 durch die Bedienperson gibt diese Signale an die Steuereinrichtung ab.

Weiterhin ist eine mobile, als Kabelfernsteuerung ausgebildete Handschalteinheit 16 vorhanden, die ihre Signale bei Betätigen durch die Bedienperson über ein Kabel 28 an die Steuereinrichtung 26 abgibt. Die mobile Handschalteinheit 16 besitzt ein Bedienelement 24. Die mobile Handschalteinheit 16 kann auch als Funkfernsteuerung ausgebildet sein. Des Weiteren ist in Fig. 1 im hinteren seitlichen Bereich des Fahrzeuges eine ortsfeste Handschalteinheit 18 vorhanden, mittels derer ebenfalls die Bewegung der Plattform 12 gesteuert werden kann.

In Fig. 1 befindet sich die Plattform 12 in angehobener Position. Zum Senken der Plattform 12 (Pfeilrichtung S) wird nur das Bedienelement 24 der mobilen Handschalteinheit 16 betätigt. So lange das Bedienelement 24 gedrückt ist, sind die Fußschalteinheiten 14 in der Plattform 12 und die ortsfeste Handschalteinheit 18 außer Funktion.

Zum Heben der Plattform 12 wird zuerst eine der beiden Fußschalteinheiten 14, 20 in der Plattform 12 gedrückt gehalten, danach das Bedienelement 24 der mobilen Handschalteinheit 16 gedrückt und gehalten. Solange die Fußschalteinheit 14 beziehungsweise 30 und die Handschalteinheit 16 gedrückt sind, ist die ortsfeste Handschalteinheit 18 außer Funktion.

Die Funktion Senken kann von dem mobilen Handschaltgerät aus erst dann ausgewählt werden, nachdem beide Schalteinheiten 14, 16 freigegeben werden.

In Fig. 2 ist ebenfalls der hintere Bereich eines Fahrzeugs mit einer Hubladebühnenvorrichtung 10 dargestellt. Dieselben Bauteile tragen dasselbe Bezugszeichen und werden nicht nochmals erläutert. Der Unterschied zu der Ausführung gemäß Fig. 1 besteht darin, dass eine mobile Handschalteinheit 30 eingesetzt wird, die ein erstes Bedienelement 34 und ein zweites Bedienelement 32 aufweist.

Zum Senken der Plattform 12 wird nur das erste Bedienelement 34 der mobilen Handschalteinheit 30 betätigt. Solange das erste Bedienelement 34 gedrückt ist, sind die Fußschalteinheiten 14, 20 in der Plattform 12 und die ortsfeste Handschalteinheit 18 außer Funktion.

Zum Heben der Plattform 12 wird zuerst eine der beiden Fußschalteinheiten 14 oder 20 in der Plattform 12 gedrückt und gehalten, danach das zweite Bedienelement 32 der mobilen Handschalteinheit 30 betätigt und gehalten. Solange die oben genannten Schalteinheiten 14 oder 20, 32 gedrückt sind, ist das erste Bedienelement 34 der mobilen Handschalteinheit 16 und die ortsfeste Handschalteinheit 18 außer Funktion.

Die Funktion Senken kann von der mobilen Handschalteinheit 16 erst dann angewählt werden, nachdem das Fußschaltelement 14 oder 20 und das zweite Bedienelement 32 der mobilen Handschalteinheit 30 freigegeben werden.

Des Weiteren sind nicht näher dargestellte Mittel zum Verriegeln vorhanden, die verhindern, dass das erste Bedienelement 34 und das zweite Bedienelement 32 der mobilen Handschalteinheit 30 gleichzeitig betätigt werden können.

## Patentansprüche

1. Hubladebühnenvorrichtung (10), insbesondere für ein Fahrzeug, mit
- einer bewegbaren Plattform (12),
- einem an die Plattform (12) angeschlossenen Gelenkmechanismus,
- einer Aggregateinrichtung, die zum Heben und Senken der Plattform auf den Gelenkmechanismus einwirkt, und
- einer Steuereinrichtung (26), die von Schalteinheiten (14; 16, 30) beaufschlagt wird und ihrerseits aufgrund der Steuersignale der Schalteinheiten (14; 16, 30) die Aggregateinrichtung zum Heben und Senken der Plattform (12) ansteuert,
**dadurch gekennzeichnet, dass**
- zumindest eine an der Plattform (12) ortsfest angeordnete Fußschalteinheit (14) vorhanden ist und
- eine mobile Handschalteinheit (16, 30) mit zumindest einem Bedienelement (24) vorhanden ist, wobei
- der Senkvorgang positionsunabhängig für den Benutzer durch Betätigen und Halten der Handschalteinheit (16, 30) ausgelöst wird und
- der Hebevorgang positionsabhängig für den Benutzer durch Betätigen und Halten der Fußschalteinheit (14) und, insbesondere anschließendem, Betätigen und Halten der Handschalteinheit (16,30) ausgelöst wird.

2. Hubladebühnenvorrichtung nach Anspruch 1,
**dadurch gekennzeichnet, dass**
- die Handschalteinheit (16, 30) und die Fußschalteinheit (14) so verschaltet sind, dass bei Freigabe der Fußschalteinheit (14) während des Hebevorgangs der Plattform (12) dieselbe anhält und ein weiterer Hebevorgang durch Betätigen und Halten der Fußschalteinheit (14) ausgelöst wird.

3. Hubladebühnenvorrichtung nach Anspruch 1 oder 2,
**dadurch gekennzeichnet, dass**
- die Handschalteinheit (16, 30) und die Fußschalteinheit (14) so verschaltet sind, dass eine Umkehrung der Bewegung vom Hebevorgang in den Senkvorgang nur möglich ist, wenn zuvor die Fußschalteinheit (14) und die Handschalteinheit (16, 30) freigegeben werden.

4. Hubladebühnenvorrichtung nach einem oder mehreren der vorstehenden Ansprüche,
**dadurch gekennzeichnet, dass**
- die Handschalteinheit (16, 30) als Kabelfernsteuerung oder als Funkfernsteuerung ausgebildet ist.

5. Hubladebühnenvorrichtung nach einem oder mehreren der vorstehenden Ansprüche,
**dadurch gekennzeichnet, dass**
- an der Plattform (12) zumindest eine weitere Fußschalteinheit (20) vorhanden ist.

6. Hubladebühnenvorrichtung nach einem oder mehreren der vorstehenden Ansprüche,
**dadurch gekennzeichnet, dass**
- der Abstand der Fußschalteinheit (14, 20) zu einer Ladekante (22) mindestens den Maßen eines großen Schrittes eines erwachsenen Menschen entspricht.

7. Hubladebühnenvorrichtung nach einem oder mehreren der vorstehenden Ansprüche,
**dadurch gekennzeichnet, dass**
- neben der mobilen Handschalteinheit (16, 30) eine stationäre Handschalteinheit (18) vorhanden ist und beide Schalteinheiten so geschaltet sind, dass die mobile Handschalteinheit (16, 30) Priorität besitzt.

8. Hubladebühnenvorrichtung nach einem oder mehreren der vorstehenden Ansprüche,
**dadurch gekennzeichnet, dass**
- die mobile Handschalteinheit (30) ein erstes Bedienelement (32) aufweist, dessen Betätigen und Halten die Senkbewegung der Plattform (12) auslöst, und ein zweites Bedienelement (34) aufweist, dessen Betätigen und Halten die Hebebewegung der Plattform (12) in Verbindung mit dem betätigten und gehaltenen Fußschaltelement (14) auslöst.

9. Hubladebühnenvorrichtung nach Anspruch 8,
**dadurch gekennzeichnet, dass**
- Mittel zum Verriegeln vorhanden sind, die ein gleichzeitiges Betätigen des ersten Bedienelements (32) und des zweiten Bedienelements (34) verhindern.
